# EUROPEAN PATENT APPLICATION

(11) **EP 3 936 221 A1**
(43) Date of publication of application: **12.01.2022**
(21) Application number: 20184361.2
(22) Date of filing: 07.07.2020
(51) Int. Cl.: B01D 53/94, F01N 3/035

(54) **CATALYSED PARTICULATE FILTER WITH ENHANCED PASSIVE SOOT FUNCTIONALITY**

(71) Applicant: UMICORE AG & Co. KG, 63457 Hanau-Wolfgang (DE)
(72) Inventor: COLOMBO, Massimo, 63450 Hanau (DE); BENDER, Michael, 63791 Karlstein am Main (DE); DE TONI, Andrea, 63450 Hanau (DE); SCHWABEGGER, Wolfgang, 60596 Frankfurt am Main (DE); GEISSELMANN, Andreas, 63075 Offenbach (DE)

(57) **Abstract**

A particulate filter comprising
▪ a wall flow filter substrate of length L, which extends from the downstream face side to the upstream face side B,
▪ a material zone x which extends from the downstream face side over 15 to 85% of the length L until end point X
wherein material zone x comprises a SCR catalyst and the zone between endpoint X and the upstream face side does not comprise a vanadium oxide based SCR catalyst or a zeolite-based catalyst of the type Fe-zeolite or Cu-zeolite.

## Description

### Field of Invention

The present invention relates to an article for treating exhaust gas from a lean operated combustion engine for the reduction of NOx- and particulate emissions.

### Background of the Invention

Most of the diesel vehicles today apply an exhaust aftertreatment system comprising a particulate filter to control particulate emissions and a selective catalytic reduction (SCR) catalyst to control NOₓ-emissions.

Wall flow filters, which consist of porous material of ceramic of metallic nature, allow a high filtration efficiency. The soot particulates are collected within the filter, which consists of inlet- and outlet channels, which are alternatingly open at the inlet end and plugged at the outlet end or vice versa, and which are extending from one face side of the substrate to the other face side longitudinally in parallel. The soot collected is partly burned off continuously ("passive regeneration"), for which CO and NO₂ are the oxidants, of which the latter is by far the stronger and therefore more efficient oxidant:

2 NO₂ + C → CO₂ + NO

NO₂ + C → CO + NO

As the passive regeneration is normally not sufficient to reach sufficient filter regeneration, in most applications "active regeneration" is done on a regular basis, during which the filter is heated up to reach light-off of the soot. The required thermal energy is normally generated by exotherm reaction, for example by fuel post-injection. This fuel post-injection, however, causes some fuel penalty.

The selective catalytic reduction applying an SCR catalyst allows the reduction of nitrogen oxides even under lean conditions. For this a reductant is added. Ammonia, injected as aqueous solution into the exhaust stream, is the most common reductant for this:

NO₂ + NO + 2 NH₃ -> 2N₂ + 3 H₂O (fast SCR-reaction)

3NO₂ + 4 NH₃ -> 3.5 N₂ + 6 H₂O

For the sake of small packaging this may be combined in a single unit, a particulate filter comprising material catalytically active for the SCR. Other functional materials may be added.

However, care has to be taken how to build up this component. A lot of different approaches have been described, and below some examples are given:
US7856809 describes such a system, on which the SCR-coating is applied from the outlet side of the porous filter walls over the whole length of the filter to separate spatially the exothermic soot-burning from the SCR-coating material and therefore minimize the thermal aging of the latter.
US7481983 explains a combination of SCR catalyst in a front zone and an ammonia-slip catalyst, controlling ammonia emissions from unused ammonia, in a rear zone. The substrate may be a filter substrate. Filter regeneration is not considered.
US9333461 describes the combination of a Platinum-group metal (PGM) trap with an SCR-catalyst downstream. If a filter substrate is used, the PGM-trap is disposed in the channels of the filter substrate open to the inlet, while the SCR-catalyst is placed in the channels open to the outlet. By this configuration, any exhaust gas is passing the PGM-trap before entering the SCR-layer, therefore avoiding the PGM-deposition on the SCR-catalyst leading to the competing ammonia-oxidation to NOₓ by which the ammonia is lost as reductant for NOₓ-reduction, but in contrast even increases the NOₓ-emissions.
Patent application US2018/0353905 proposes to apply a short zone of high PGM-concentration to the outlet side of a filter with SCR-active coating to oxidize any unreacted ammonia before being emitted to the outside atmosphere.
US9527031 describes a particulate filter with a NOₓ-storage catalyst within the inlet channels on the inlet side, SCR-active catalyst particles within the filter wall pores, and a DOC-catalyst within the outlet channels on the outlet side to allow low-temperature NOx-emission control by the NOₓ-storage component, NOₓ-conversion during lean conditions by the SCR-component, and NH₃-embatement by the DOC-catalyst.
US8795617 proposes a zoned particulate filter, of which the upstream zone is equipped with a NOₓ-storage catalyst, and the downstream zone with a SCR-catalyst. In addition iron, manganese, copper and / or nickel or their mixtures are added. This concept is reported to show improved exhaust gas cleaning properties.
Patent application US2018/0185788 describes a particulate filter, combining NOₓ-storage catalyst functionality brought into the inlet channels of the filter substrate by in-wall- and on-wall-coating, with a SCR-catalyst placed in the outlet channels.

This invention focuses on a different challenge with filters comprising SCR-catalysts: tests show that the SCR-catalyst hampers the passive filter regeneration. Higher fuel penalty due to more frequently required active regeneration and increased backpressure of the filter due to the higher soot loading are the consequences.

This observation is surprising, as following the flow of the reaction gas, the SCR-catalyst is located downstream of the soot cake. The inventors assume that this is due to slow soot oxidation reaction in combination with the fast SCR-reaction over the SCR-catalyst, and back-diffusion of gas with reduced NO₂-content from the SCR-catalyst containing area into the soot cake layer.

The object of this invention is therefore to provide a catalytic article for the removal of particulate matter and NOₓ with improved passive filter regeneration..

Inventors have found that if a zone on the inlet side of the catalytic article is kept free of any SCR-active material, the passive regeneration function of the particulate filter improves with regard to soot removal. It is assumed that with a filter substrate free of SCR-active material at the upstream zone more NO₂ can be provided for the passive regeneration of the filter than with a filter substrate catalytically active for SCR-reaction over its total length L. This leads to improved passive regeneration of the particulate filter.

### Description of the Invention

The object to provide a catalytic article for the removal of particulate matter and NOx with improved passive filter regeneration is solved by a catalytic article comprising
- a wall flow filter substrate of length L, which extends from a face side A to a face side B,
- a material zone x which extends from face side A over 15 to 85%, and more preferably over 30 to 80% of the length L until end point X.
wherein material zone x comprises a SCR catalyst and the zone between endpoint X and face side B does not comprise a vanadium oxide based SCR catalyst or a zeolite-based catalyst of the type Fe-zeolite or Cu-zeolite.

It has surprisingly been found that the catalytic article for the removal of particulate matter and NOx from exhaust gas of lean combustion engines according to the present invention provides an improved passive filter regeneration with regard to the soot removal, when installed with face side B upstream and face side A downstream.

The catalytic article for the removal of particulate matter and NOx from exhaust gas of lean combustion engines and the method for its manufacture are explained below, with the invention encompassing all the embodiments indicated below, both individually and in combination with one another.

A "catalyst substrate", also just called "a substrate" is a support to which the catalyst or catalyst composition is affixed and shapes the final catalyst. The catalyst substrate is thus a carrier for the catalyst or catalyst composition.

A wall-flow filter substrate or just "a wall-flow filter", as used in the present invention, is a porous catalyst substrate having a plurality of channels extending longitudinally and in parallel from one face side of the substrate to the other face side. The channels are alternatingly open at the inlet and plugged at the outlet end or vice versa.

A "catalyst" or "catalyst composition" is a substance or a mixture of substances which is capable to convert one or more components of an exhaust gas into one or more other components. An example of such a catalyst is, for instance, an oxidation catalyst or an oxidation catalyst composition which is capable of converting volatile organic compounds and carbon monoxide to carbon dioxide or ammonia to nitrogen oxides. Another example of such a catalyst is, for example, a selective reduction catalyst (SCR catalyst) or an SCR catalyst composition which is capable of converting nitrogen oxides to nitrogen and water. In the context of the present invention, a catalytic article having an SCR functionality is a catalytic article comprising an SCR catalyst or an SCR catalyst composition. In the context of the present invention, nitrogen oxides are also referred to as "NOx".

A "washcoat support" is a carrier for the catalyst or the catalyst composition and is suitable to disperse the catalyst or the catalyst composition over a large surface area of the support. Said surface area can be present in the porous walls of the wall-flow filter, or on the porous walls, or both. Materials which are suitable washcoat supports are, for example, aluminum oxide, titanium dioxide, silicon dioxide, or mixtures of silica and alumina. A "washcoat" as used in the present invention is thus a catalyst or catalyst composition dispersed on a washcoat support material. It is also possible to apply a washcoat support that does not comprise any catalyst or catalyst composition on a zone of the wall-flow filter substrate, as will be explained in more detail below.

The term "zone" as used in the present invention refers to an area (on or in the porous walls) of the wall-flow filter which extends from one endpoint to another endpoint of the length L, wherein L is the entire length of the filter. One endpoint can, for instance, be face side A or face side B, respectively, and the other endpoint can either be the opposite face side or any point located at the longitudinal distance between face sides A and B. The zone may comprise a catalyst or a catalyst composition and/or a washcoat support, or it may not comprise any material at all.

The skilled person knows that in the case of wall-flow filters, their average pore sizes and the mean particle size of the catalysts according to the present invention may be adjusted to one another in a manner that the coating thus obtained is located onto the porous walls which form the channels of the wall-flow filter (on-wall coating). However, the average pore sizes and the mean particle sizes are preferably adjusted to one another in a manner that the catalyst according to the present invention is located within the porous walls which form the channels of the wall-flow filter. In this preferable embodiment, the inner surfaces of the pores are coated (in-wall coating). In this case, the mean particle size of the catalysts according to the present invention has to be sufficiently small to be able to penetrate the pores of the wall-flow filter.

"Face side A" and "face side B", respectively, as used in the present invention, define the face sides that are located at the inlet end and outlet end of the wall-flow filter. They are located perpendicularly to the longitudinal channels within the filter and also perpendicularly to the flow direction of the exhaust gas. The "total" or "entire" length L of the wall-flow filter is the distance between face sides A and B, and length L is also perpendicular to face sides A and B.

"Upstream" and "downstream" are terms relative to the normal flow direction of the exhaust gas in the exhaust pipeline. A "zone 1 which is located upstream of a zone 2" means that the zone 1 is positioned closer to the source of the exhaust gas, i.e. closer to the motor, than the zone 2. The flow direction is from the source of the exhaust gas to the exhaust pipe.

A "catalytic article" comprises of a catalyst substrate and a catalyst or catalyst composition affixed to said catalyst substrate. Optionally, the catalyst or catalyst composition is present in the catalytic article in the form of a washcoat as defined above.

A "mixture" as used in the context of the present invention is a material made up of two or more different substances which are physically combined. A mixture is the physical combination of two or more substances in which the identities are retained and are mixed in the form of solutions, suspensions and/or colloids. Mixtures are a product of mechanically blending or mixing chemical substances such as elements and compounds, without chemical bonding or other chemical change, so that each ingredient substance retains its own chemical properties and makeup. Despite the fact that there are no chemical changes to its constituents, the physical properties of a mixture, such as its melting point, may differ from those of the components.

A "mixed oxide" as used in the context of the present invention is a compound comprised of several oxides, wherein the crystal lattice comprises oxygen atoms and cations of more than one element. By contrast, a mixture of oxides is a physical mixture of two or more oxides.

The wall-flow filter according to the present invention is a commercially available monolith, made by extrusion of ceramic materials. In one embodiment, it deals with a honeycomb wall-flow filter. Suitable ceramic materials are, for instance, cordierite, silicon carbide and aluminum titanate. The wall-flow filter has a porosity of 35 to 75 vol.-%, preferably 50 to 70 vol.-%, even more preferably 60 to 65 vol.-%. The pores within the porous walls have an average diameter D₅₀ of 10 to 30 µm, preferably 15 to 20 µm.

Material zone x extends from face side A to over 15 to 85 %, more preferably 30 to 80%, of length L until end point X, wherein L is the length of the wall-flow filter substrate. Endpoint X is located on length L between face sides A and B.

Material zone x comprises an SCR catalyst. In the present invention, the SCR catalyst is selected from vanadium-based SCR catalysts, zeolitic molecular sieves, non-zeolitic molecular sieves, and mixtures thereof. Both vanadium-based SCR catalysts and molecular sieves are SCR catalysts that are well-known to the skilled person.

Vanadium-based SCR catalysts comprise a mixture of oxides of vanadium and titanium. Preferably, the mixture comprises V₂O₅ and TiO₂, the latter preferably in the anatase form. Furthermore, a vanadium-based SCR catalyst may comprise one or more oxides of other elements. These oxides can, for instance, be selected from oxides of tungsten, silicon, molybdenum, cerium, antimony, and zirconium. Suitable oxides are WO₃, SiO₂, MoO₃, CeO₂, Sb₂O₅ and ZrO₂. The skilled person knows these vanadium-based SCR catalysts and can apply them in the present invention without departing from the scope of the claims.

A molecular sieve is a material with pores, i.e. with very small holes, of uniform size. These pore diameters are similar in size to small molecules, and thus large molecules cannot enter or be adsorbed, while smaller molecules can. In the context of the present invention, a molecular sieve can be zeolitic or non-zeolitic. Zeolites are made of corner-sharing tetrahedral SiO₄ and AlO₄ units. They are also called "silicoaluminates".

As used herein, the terminology "non-zeolitic molecular sieve" refers to corner-sharing tetrahedral frameworks wherein at least a portion of the tetrahedral sites are occupied by an element other than silicon or aluminum. If a portion, but not all silicon atoms are replaced by phosphorous atoms, it deals with so-called "silico aluminophosphates" or "SAPOs". If all silicon atoms are replaced by phosphorous, it deals with aluminophosphates or "AIPOs".

A "zeolite framework type", also referred to as "framework type", represents the corner-sharing network of tetrahedrally coordinated atoms. It is common to classify zeolites according to their pore size which is defined by the ring size of the biggest pore aperture. Zeolites with a large pore size have a maximum ring size of 12 tetrahedral atoms, zeolites with a medium pore size have a maximum pore size of 10 and zeolites with a small pore size have a maximum pore size of 8 tetrahedral atoms. Well-known small-pore zeolites belong in particular to the AEI, CHA (chabazite), ERI (erionite), LEV (levyne), AFX and KFI framework. Examples having a large pore size are zeolites of the faujasite (FAU) framework type.

A "zeotype" comprises any of a family of materials based on the structure of a specific zeolite. Thus, a specific "zeotype" comprises, for instance, silicoaluminates, SAPOs and AlPOs that are based on the structure of a specific zeolite framework type. Thus, for example, chabazite (CHA), the silicoaluminate SSZ-13, the silicoaluminophosphate SAPO-34 and the aluminophosphate MeAlPO-47 all belong to the chabazite framework type. The skilled person knows which silicoaluminates, silico aluminophosphates and aluminophosphates belong to the same zeotype. Furthermore, zeolitic and non-zeolitic molecular sieves belonging to the same zeotype are listed in the database of the International Zeolite Association (IZA). The skilled person can use this knowledge and the IZA database without departing from the scope of the claims.

In the present invention, zeolitic and non-zeolitic molecular sieves to be used as SCR catalysts or as a component of an SCR catalyst composition contain a transition metal. The transition metal is preferably selected from copper, iron and mixtures thereof.

Suitable crystalline aluminosilicate zeolites having a maximum pore size of eight tetrahedral atoms are, for instance, zeolite framework type materials chosen from ACO, AEI, AEN, AFN, AFT, AFX, ANA, APC, APD, ATT, BEA, BIK, CDO, CHA, DDR, DFT, EAB, EDI, EPI, ERI, ESV, ETL, GIS, GOO, IHW, ITE, ITW, LEV, KFI, MER, MON, NSI, OWE, PAU, PHI, RHO, RTH, SAT, SAV, SIV, THO, TSC, UEI, UFI, VNI, YUG, ZON and mixtures and intergrowths that contain at least one of these framework types.

In one embodiment of the present invention, the zeolites are chosen from AEI, AFT, AFX, BEA, CHA, DDR, ERI, ESV, ETL, KFI, LEV, UFI and mixtures and intergrowths thereof. Preferably, the zeolites are chosen from AEI, BEA, CHA, AFX and mixtures and intergrowths that contain at least one of these framework types. In a particularly preferred embodiment, the zeolite is AEI. In another particularly preferred embodiment, the zeolite is CHA.

As described above, when used in the context of the present invention, said zeolites are preferably loaded with copper, iron or a mixture of copper and iron.

Suitable molecular sieve zeolites have a SAR value of from 2 to 50, preferably 10 to 25, and more preferably 10 to 20. The zeolites have a copper and/or iron content of from 0.1 to 10 wt.-%, preferably 0.5 to 7 wt.-%, even more preferably 3.0 to 5.5 wt.-%, calculated as the respective oxides CuO and Fe₂O₃, respectively, and based on the total weight of the zeolite.

As defined above, the SCR catalyst comprised in material zone x is selected from vanadium-based SCR catalysts, zeolitic molecular sieves, non-zeolitic molecular sieves, and mixtures thereof. This means that material zone x may comprise only one vanadium-based SCR catalyst or only one zeolitic molecular sieve or only one non-zeolitic molecular sieve, respectively, as the only SCR catalyst. It is, however, also possible to use mixtures of these SCR catalysts in material zone x. Mixtures can be
a) mixtures of two or more vanadium-based SCR catalysts, or
b) mixtures of two or more zeolitic molecular sieves, or
c) mixtures of two or more non-zeolitic molecular sieves, or
d) mixtures comprising at least one vanadium-based SCR catalyst and at least one zeolitic molecular sieve, or
e) mixtures comprising at least one vanadium-based SCR catalyst and at least one non-zeolitic molecular sieve, or
f) mixtures comprising at least one zeolitic molecular sieve and at least one non-zeolitic molecular sieve, or
g) mixtures comprising at least one vanadium-based SCR catalyst, at least one zeolitic molecular sieve and at least one non-zeolitic molecular sieve.

"Two or more zeolitic or non-zeolitic molecular sieves" and " at least one zeolitic or non-zeolitic molecular sieve" means that it can deal with two or more zeolitic or non-zeolitic molecular sieves belonging to the same framework structure, but having, for instance, different SAR values (silica to alumina ratios, as defined below) and/or being loaded with different transition metals and/or having different amounts of transition metal loadings. It may also deal with two or more zeolitic or non-zeolitic molecular sieves belonging to different zeolite framework types. Furthermore, if at least three zeolitic or non-zeolitic molecular sieves are present, it is also possible that at least two of them belong to the same zeolite framework type, and at least two of them belong to two different zeolite framework types, or they may all belong to the same zeolite framework type, but differ with regard to their SAR values, transition metals, or amounts of transition metals, as explained above.

In one embodiment of the present invention, the SCR catalyst in material zone x is present in the form of a washcoat as defined above. The washcoat support is selected from oxides of aluminum, titanium, silicon, cerium, zirconium and mixtures thereof. In order to prepare a washcoat, the SCR catalyst is preferably present in powder form, and it is mixed with water and the washcoat support material. This mixture is stirred or homogenized and may then be applied directly as a coating suspension to coat the catalyst substrate. This washcoat can comprise vanadium-based SCR catalysts and/or zeolitic and/or non-zeolitic molecular sieves and mixtures thereof as described above.

In another embodiment of the present invention, the SCR catalyst in material zone x is a vanadium-based SCR catalyst, and it is applied by impregnation and without a washcoat support. Precursors of vanadium, titanium and optionally other metals, for instance precursors of oxides of tungsten, silicon, molybdenum, cerium, antimony, and/or zirconium and mixtures thereof are dissolved in water. It is possible to provide one single aqueous solution comprising precursors of all metal oxides. It is also possible to provide several aqueous solutions, each solution comprising only one or more, but not all precursors, and to impregnate the catalyst substrate stepwise. After each impregnation, the impregnated catalyst substrate is dried and subsequently calcined in an oxygen-containing atmosphere, for instance in air. During calcination, the precursor converts into the intended metal oxide, i.e. it converts into V₂O₅, TiO₂, WO₃, SiO₂, MoO₃, CeO₂, Sb₂O₅ and/or ZrO₂. The impregnation method is known to the skilled person and can be applied in the context of the present invention without departing from the scope of the claims.

In the context of the present invention, a material shall be considered to be an SCR catalyst if the NOx conversion rate of said material, as measured on a model gas test bench with a feed gas stream consisting of 600 vol.-ppm NH₃, 300 vol.-ppm NO, 200 vol.-ppm NO₂, 10 vol.-% O₂, 5 vol.-% H₂O and balance N₂, and a space velocity of 30,000 h⁻¹ and a temperature of 250°C, is at least 15% higher than that of an uncoated substrate. Put another way, according to the present invention, a material is not considered an SCR catalyst or an SCR catalyst composition if said material shows a NOx conversion under above conditions of less than 15 % than that of an uncoated substrate. Therefore, a substrate with little amount of SCR-active material, providing less than 15% higher NOx-conversion than an uncoated substrate, is also not considered to be an SCR catalyst.

The skilled person knows that the NOx conversion rate of a specific material does not only depend on its nature, but also on the concentration and / or amount of the material.

One embodiment does not comprise an SCR catalyst between endpoint X and face side B.

A specific embodiment consists of the wall flow filter of length L and the material zone x.

In other embodiments the particulate filter comprises a material zone y which extends from face side B over 15 to 85%, and more preferably over 30 to 80% of the length L until endpoint Y, and which comprises a coating which is not a SCR catalyst.

Preferably, the material of material zone y comprises an oxide of Al or Si or Ce or Ti or a mixture of two or more of these oxides or a mixed-oxide component thereof. A material shall be called a mixed-oxide component if it consists of a crystal lattice containing, beside the oxygen ions, cations of more than one element.

In a preferred embodiment the material of material zone y comprises at least 80 weight-% alumina.

Preferably, the washcoat loading of material zone y is in the range of 10 to 100 g/l based on the volume of the wall flow filter substrate section over which material zone y extends.

In a preferred embodiment of the invention at least 30 weight-% of the SCR catalyst or SCR catalyst composition of material zone are located within the pores of the porous walls of the wall flow filter, in a more preferred embodiment all SCR catalyst containing material is placed within the pores of the porous walls of the wall flow filter substrate.

As mentioned above, the wall-flow filter has a porosity of 35 to 75 vol.-%, preferably 50 to 70 vol.-%, even more preferably 60 to 65 vol.-%. The pores within the porous walls have an average diameter D₅₀ of 10 to 30 µm, preferably 15 - 20 µm. It is obvious that the particle sizes of the SCR catalytically active materials must be smaller than the diameter of the pore sizes in order to be deposited within the pores. Pore sizes of the porous walls can be measured by mercury porosity, and particle sizes of the SCR catalytically active materials can be measured by Scanning Electrode Microscopy (SEM-images). The skilled person knows how to adjust the particle sizes of the SCR catalytically active material to the average pore diameters so that at least 35% or even 100% of the SCR catalytically active material can be deposited into the pores of the porous walls. He can make use of this knowledge without departing from the scope of the claims.

Preferably, the SCR catalyst or SCR catalyst composition comprised in material zone x is selected from vanadium-based SCR catalysts and zeolitic molecular sieves loaded with copper, iron or mixtures of copper and iron.

Furthermore, the SCR catalyst or SCR catalyst composition is preferably present in form of a washcoat, and the washcoat loading of material zone x is in the range of 20 to 140 g/l, more preferably 30 to 100 g/l, based on the volume of the wall flow filter substrate section over which material zone x extends.

In a preferred embodiment the particulate filter does not contain precious metal. However, a particulate filter shall be considered not to contain any precious metal if its content is less than 0,02g/l based on the particulate filter volume.

In another embodiment of the invention, a dry powder-gas aerosol, comprising a metal oxide composition with a melting point above 1000°C, has been applied to the particulate filter after coating, so that the powder has been precipitated within the pores of the filter walls without forming a continuous layer on the wall surface.

The invention further comprises an exhaust gas aftertreatment system comprising a particulate filter according to the invention.

### Examples

The following examples are described to demonstrate the advantage of the present invention:

### Example 1 (E1):

A Cordierite filter substrate of 6.5" diameter and 5.53" length, with a porosity of 65 vol.-% and a mean pore size of 20 µm, was coated from face side A with a washcoat comprising Cu-ion exchanged CHA-zeolite over a length of 30% of the total substrate length, targeting a washcoat loading of 40 g/l within the coated zone. After drying, the sample was calcined at 500 - 600°C under air.

### Example 2 (E2):

A Cordierite filter substrate of 6.5" diameter and 5.53" length, with a porosity of 65 vol.-% and a mean pore size of 20 µm, was coated from face side A with a washcoat comprising Cu-ion exchanged CHA-zeolite over a length of 50% of the total substrate length, targeting a washcoat loading of 40 g/l within the coated zone. After drying, the sample was calcined at 500 - 600°C under air.

### Example 3 (E3)

A Cordierite filter substrate of 6.5" diameter and 5.53" length, with a porosity of 65vol.-% and a mean pore size of 20 µm, was coated from face side A with a washcoat comprising Cu-ion exchanged CHA-zeolite over a length of 50% of the total substrate length, targeting a washcoat loading of 40 g/l within the coated zone. After drying the sample was coated from the opposite side (face side B) with a washcoat comprising stabilized alumina over a length of 50% of the total substrate length, targeting a washcoat loading of 40 g/l within the coated zone. After drying, the sample was calcined at 500 - 600°C under air.

### Comparative Example 1 (CE1):

As reference an uncoated filter substrate of 6.5" diameter and 5.53" length, with a porosity of 65% and a mean pore size of 20 µm, was used.

### Comparative Example 2 (CE2):

A Cordierite filter substrate of 6.5" diameter and 5.53" length, with a porosity of 65vol.-% and a mean pore size of 20 µm, was coated with a washcoat comprising Cu-ion exchanged CHA-zeolite over the full length of the substrate targeting a washcoat loading of 40 g/l. After drying the sample was calcined at 500 - 600°C under air.

### Testing

Cores of 2" diameter and of full length of the substrate were drilled out of the substrate, loaded with 4g/l soot at a Diesel engine, and tested on a model gas test bench with a feed gas stream consisting of 600 vol.-ppm NH₃, 300 vol.-ppm NO, 200 vol.-ppm NO₂, 10 vol.-% O₂ and 5 vol.-% H₂O, balance N₂. The space velocity was 30000 h⁻¹, the temperature was 400°C. During testing CO₂ released was detected and the corresponding amount of burned soot calculated.

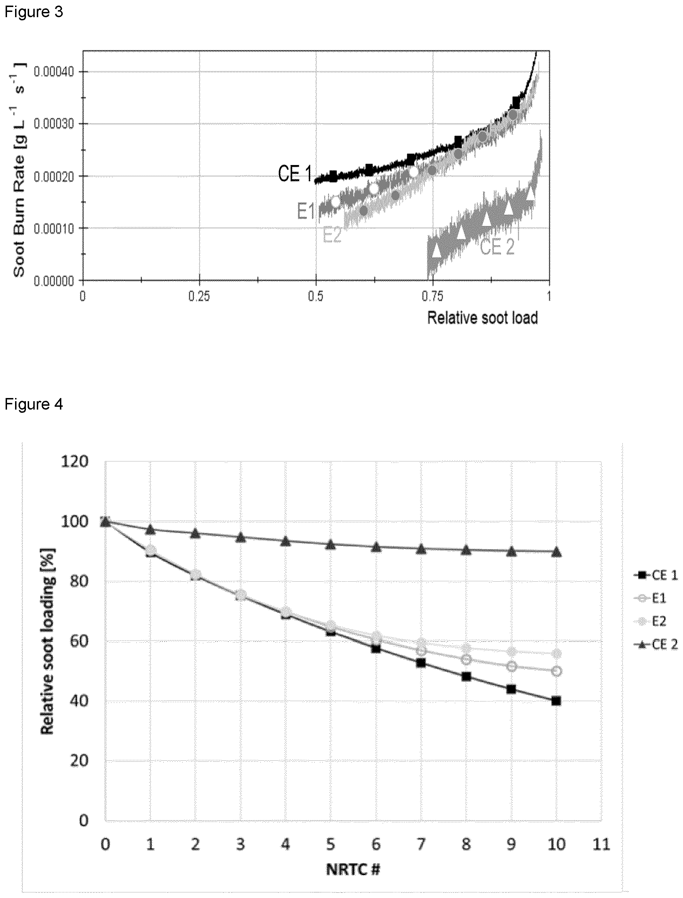

As can be seen from Figure 3, E1 (empty circles) and E2 (full circles) show only little reduction in soot burn rate in comparison to CE1 (full rectangles), while CE2 (empty triangles) allows only a significantly slower soot burn rate than the other samples.

The samples were further tested on the model gas test bench under a simulated NRTC (non-road transient cycle; directive 97/68/EC of the european parliament and of the council of 16 december 1997). Conditions were as follows: Temperature at particulate filter inlet: average: 320 °C, maximum: 400 °C; Temperature at particulate filter outlet: average: 260°C, maximum: 360°C, average ratio NO₂/NOₓ = 36%, ratio NH₃/NOₓ = 1.2.

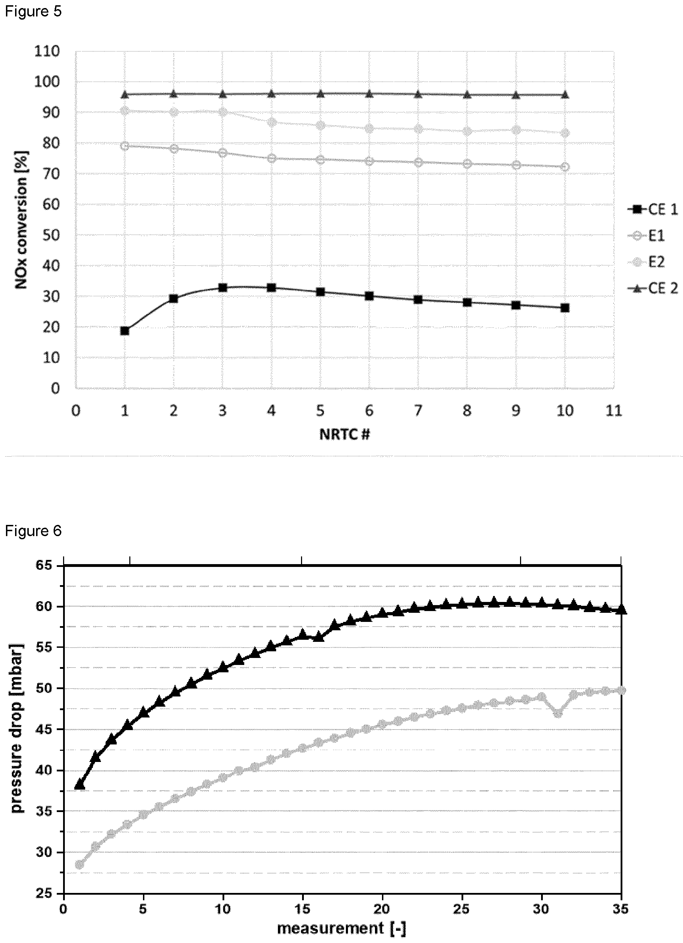

Figure 4 and Figure 5 show the result. Figure 4 shows the relative soot loading (100% =initial soot loading) as a function of the number of NRTC runs. Again, soot loading was calculated from the initial soot loading and the soot burned off calculated by COₓ emitted. As can be seen from the result, E1 (empty circles) and E2 (full circles) show nearly the same soot loading as CE1 (full rectangles) up to the 4th NRTC. After five to ten NRTC-runs the soot loading remains still quite close to the one of CE1. Using CE2 (full triangles), in contrast to that, only 5% of the soot has been burned off after the 10 NRTC.

Figure 5 shows the NOx-conversion as a function of NRTC runs. While CE1 allows a conversion of less than 30% after ten NRTC-runs, E1 and E2 provide a conversion of above 70% and 80%, respectively.

The results show that the catalyzed filters according to the invention show a significantly improved passive regeneration behavior, while the loss in NOx-reduction remains very moderate.

### Data to Figure 4 (left) and Figure 5 (right):

| Relative soot loading [%] | | | | |
|---|---|---|---|---|
| NRTC# | CE1 | E1 | E2 | CE2 |
| 0 | 100,0 | 100,0 | 100,0 | 100,0 |
| 1 | 89,6 | 90,4 | 90,4 | 97,4 |
| 2 | 81,8 | 82,2 | 82,4 | 96,1 |
| 3 | 75,1 | 75,4 | 75,4 | 94,8 |
| 4 | 68,9 | 69,7 | 69,9 | 93,5 |
| 5 | 63,1 | 64,7 | 65,3 | 92,4 |
| 6 | 57,7 | 60,4 | 61,8 | 91,5 |
| 7 | 52,7 | 56,9 | 59,4 | 90,9 |
| 8 | 48,1 | 53,9 | 57,7 | 90,5 |
| 9 | 43,9 | 51,6 | 56,6 | 90,1 |
| 10 | 40,0 | 50,0 | 55,8 | 89,9 |

| NOx conversion [%] | | | | |
|---|---|---|---|---|
| NRTC# | CE1 | E1 | E2 | CE2 |
| 1 | 18,7 | 79,1 | 90,6 | 96,0 |
| 2 | 29,2 | 78,2 | 90,1 | 96,1 |
| 3 | 32,8 | 76,9 | 90,1 | 96,0 |
| 4 | 32,9 | 75,0 | 86,9 | 96,2 |
| 5 | 31,5 | 74,7 | 85,8 | 96,2 |
| 6 | 30,2 | 74,2 | 84,8 | 96,2 |
| 7 | 28,9 | 73,8 | 84,6 | 96,0 |
| 8 | 28,1 | 73,2 | 83,9 | 95,8 |
| 9 | 27,2 | 72,9 | 84,3 | 95,8 |
| 10 | 26,3 | 72,3 | 83,3 | 95,8 |

Figure 6 shows the backpressure, measured on an engine bench using the NRTC after each NRTC, over a particulate filter P1, coated over 50% of its total length only (grey line with circles), with a similar filter, but with coated upstream zone (P2).

As can be expected, P2 results in a higher backpressure than P1. This backpressure can vary depending on the nature of the coating layer of the upstream zone. In comparison to P1 a coated upstream zone as chosen for P2 allows to adjust the filtration efficiency required for the specific application. Further, the coating of the front zone ensures that sufficient exhaust gas is passing through the SCR-coating of the rear zone.

### Data to Figure 6:

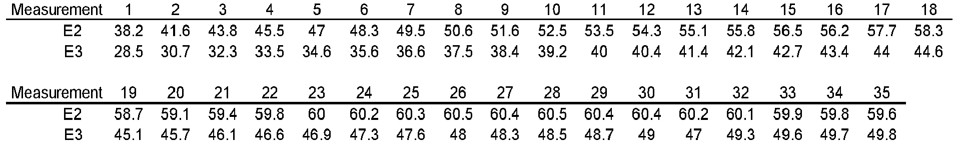

### Brief description of the drawings.

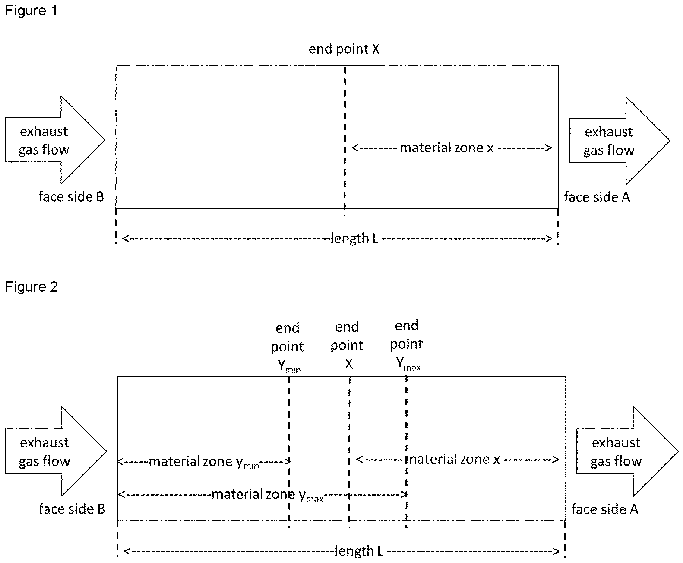

Figure 1 is a schematic drawing of an embodiment of the present invention. L is the length of the filter substrate, material zone x is coated with an SCR catalyst or SCR catalyst composition, while the zone between face side B and end point X remains uncoated.
Figure 2 is a schematic drawing of another embodiment of the present invention. L is the length of the filter substrate, material zone x is coated with an SCR catalyst or SCR catalyst composition. Material zone y, extending from face side B to end point Y, is coated which is not an SCR-catalyst. End point Y can be located anywhere between Yₘᵢₙ and Yₘₐₓ. If end point Y is located between Yₘᵢₙ and end point X, there is a gap between the coating of material zone x and material zone y, if end point Y is located between Yₘₐₓ and end point X there is an overlap of the coatings of material zone x and material zone y.
Figure 3 shows the soot burn rate versus the relative soot load for examples 1 and 2 (E1 and E2), which are embodiments as described in Figure 1 with different material zone x lengths and material zone y uncoated, comparative example 1 (CE1), which is an uncoated wall-flow filter substrate, and comparative example 2 (CE2), which is a wall-flow filter substrate coated with Cu-CHA over the entire length. The tests were done on a model gas test bench.
Figure 4 shows the relative soot loading versus the test cycle number for E1 (empty circles), E2 (full circles), CE1 (full rectangles) and CE2 (full triangles) as measured in the NTRC test cycle. The relative soot loading is a measure for the soot regeneration status with regard to the soot removal.
Figure 5 shows the NOx conversion versus the test cycle number for E1 (empty circles), E2 (full circles), CE1 (full rectangles) and CE2 (full triangles) as measured in the NTRC test cycle. Figure 6 shows the backpressure, measured on an engine bench using the NRTC after each NRTC, over a particulate filter with a Cu-ion exchanged CHA-zeolite coating over a length of 50% of the total substrate length with uncoated upstream zone between face side B and end point X (grey line with circles), and a particulate filter with a Cu-ion exchanged CHA-zeolite coating over a length of 50% of the total substrate length, with material zone y coated with stabilized alumina (dark line with triangles), with the length of material zone y extending from face side B to end point X.

## Claims

1. A particulate filter comprising
▪ a wall flow filter substrate of length L, which extends from a face side A to a face side B,
▪ a material zone x which extends from face side A over 15 to 85% of the length L until end point X
wherein material zone x comprises a SCR catalyst and the zone between endpoint X and face side B does not comprise a vanadium oxide based SCR catalyst or a zeolite-based catalyst of the type Fe-zeolite or Cu-zeolite.

2. The particulate filter according to claim 1, **characterized in that** material zone x extends from face side A over 30 to 80% of the length L until end point X

3. The particulate filter according to claim 1 and/or 2, **characterized in that** the zone between endpoint X and face side B does not comprise a SCR catalyst.

4. The particulate filter according one or more of claims 1 to 3, **characterized in that** it consists of a wall flow filter of length L and a material zone x.

5. The particulate filter according to one or more of claims 1 to 3, **characterized in that** the particulate filter comprises a material zone y which extends form face side B over 15 to 85% of the length L until endpoint Y which comprises a coating which is not a SCR catalyst.

6. The particulate filter according to one or more of claims 1, 2, 3, and/or 5, **characterized in that** the particulate filter comprises a material zone y which extends form face side B over 30 to 80% of the length L until endpoint Y which comprises a coating which is not a SCR catalyst.

7. The particulate filter according to one or more of claims 1, 2, 3, 5 and/or 6, **characterized in that** the material zone y comprises an oxide of Al, Si, Ce and/or Ti or a mixture of two or more of these oxides or a mixed-oxide component thereof.

8. The particulate filter according to one or more of claims 1, 2, 3, 5, 6 and/or 7, **characterized in that** material of material zone y comprises at least 80 weight-% alumina.

9. The particulate filter according to one or more of claims 1, 2, 3, 5, 6 and/or 7, **characterized in that** the washcoat loading of material zone y is in the range of 10 to 100 g/l based on the volume of the wall flow filter substrate section over which material zone y extends.

10. The particulate filter according to one or more of claims 1 to 9, **characterized in that** at least 30 weight-% of the SCR catalyst of material zone x is placed within the pores of the porous walls of the wall flow filter.

11. The particulate filter according to one or more of claims 1 to 10, **characterized in that** all SCR catalyst of material zone x is placed within the pores of the porous walls of the wall flow filter.

12. The particulate filter according to one or more of claims 1 to 11, **characterized in that** the SCR-catalyst is a vanadium oxide based catalyst or a zeolite-based catalyst of the type Fe-zeolite or Cu-zeolite.

13. The particulate filter according to one or more of claims 1 to 12, **characterized in that** the washcoat loading of material zone x is in the range of 20 to 140 g/l based on the volume of the wall flow filter substrate section over which material zone x extends.

14. The particulate filter according to one or more of claims 1 to 13, **characterized in that** the particulate filter does not contain precious metal.

15. The particulate filter according to one or more of claims 1 to 14, **characterized in that** a dry powder-gas aerosol, comprising a metal oxide composition with a melting point above 1000°C, has been applied to the particulate filter after coating, so that the powder has been precipitated within the pores of the filter walls without forming a continuous layer on the wall surface.

16. Exhaust gas aftertreatment system comprising a particulate filter according to one or more of claims 1 to 15.
